# EUROPÄISCHE PATENTANMELDUNG

(11) **EP 0 971 505 A2**
(43) Veröffentlichungstag der Anmeldung: **12.01.2000**
(21) Anmeldenummer: 99440162.8
(22) Anmeldetag: 24.06.1999
(51) Int. Cl.: H04L 12/24

(54) **Verfahren zum konsistenten Ausführen von Aufträgen und Steuerungseinrichtung für ein Netzelement**

(30) Priorität: 08.07.1998 DE 19830511
(71) Anmelder: ALCATEL, 75008 Paris (FR)
(72) Erfinder: Banzhaf, Monika, 70439 Stuttgart (DE); Kocher, Hartmut Dr., 71229 Leonberg (DE)
(74) Vertreter: Rausch, Gabriele, Dr.

(57) **Zusammenfassung**

Netzelemente (NE) für Telekommunikationsnetze werden unter Verwendung verwalteter Objekte (MO1-MO3) gesteuert, auf die zugegriffen wird, wenn Aufträge eines externen Managementsystems vorliegen. Dabei müssen verschiedene Zugriffe häufig konsistent ausgeführt werden.

Bei einem Verfahren zum konsistenten Ausführen von Aufträgen werden die Aufträge zu einer Transaktion (TR_A) zusammengefaßt, die Ausführung der Aufträge tritt erst nach erfolgter Bestätigung in Kraft und wird bei ausbleibender Bestätigung rückgängig gemacht. Verwaltete Objekte (MO1), auf die im Rahmen der Transaktion (TR_A) zugegriffen wird, werden in die Transaktion eingeschlossen. Alle verwalteten Objekte (MO1-MO3) besitzen einen eindeutigen Namen, der bei Zugriff (ACC) auf ein Objekt jeweils mit einer physikalischen Adresse (ADR) verknüpft wird. Beim Verknüpfen des Objektnamens wird eine Nachricht (NOT) erzeugt, aufgrund der ein im Zugriff befindliches verwaltetes Objekt (MO1) in die Transaktion (TR_A) eingeschlossen wird.

## Beschreibung

Die Erfindung betrifft ein Verfahren zum konsistenten Ausführen von Aufträgen an eine Steuerungseinrichtung eines Netzelementes nach dem Oberbegriff des Anspruchs 1 und eine Steuerungseinrichtung für ein Netzelement eines Telekommunikationsnetzes nach dem Oberbegriff des Anspruchs 6.

Zur Steuerung von Netzelementen werden die Ressourcen des Netzelementes durch verwaltete Objekte dargestellt. Verwaltete Objekte sind real existierende Abbildungen - und damit Beschreibungen statischer und dynamischer Eigenschaften - von physikalischen oder virtuellen Komponenten (Ressourcen) des verwalteten Netzelementes. Entsprechend der CCITT Empfehlung X.720 (1/91) wird unter einem verwalteten Objekt eine zum Zweck des Managements bestehende Abstraktion von Datenverarbeitungs- und Datenkommunikations-Ressourcen (z.B. Protokollstatus-Automaten, Verbindungen oder Modems) verstanden.

Unter einem Netzelement werden Einrichtungen eines Telekommunikationsnetzes verstanden, die beispielsweise dazu dienen, Verbindungen innerhalb des Netzes einzurichten, Zugänge zu dem Netz zu schaffen, Verbindungen in dem Netz zu vermitteln oder das Übertragungsformat von Nachrichten, die in dem Netz übertragen werden, zu verändern. In einem synchronen digitalen Nachrichtenübertragungsnetz der synchronen digitalen Hierarchie (SDH) oder des Synchronous *Optical* Networks (SONET) zählen zu den Netzelementen Crossconnects, Add/Drop-Mutliplexer und Leitungsmultiplexer.

Solche Netzelemente enthalten eine Steuerungseinrichtung zur Steuerung und Überwachung der netzelementspezifischen Funktionen. Aus dem Artikel "Technologie der SDH-Netzelemente: die Software-Platform" von S. Colombo et al., Elektrisches Nachrichtenwesen 4. Quartal 1993, S.322-328, ist bekannt, daß Netzelemente nach einer objektorientierten Spezifikation arbeiten und gesteuert werden. Die Steuerungseinrichtung des Netzelementes enthält einen Prozessor, einen Speicher und Dauerspeicher. In dem Speicher sind die verwalteten Objekte gespeichert. Diese werden in dem Dauerspeicher gesichert.

Mittels des Prozessors werden Aufträge eines externen Managementsystems durchgeführt wie z.B. der Auftrag zum Einrichten einer Verbindung wie dies in "Management von SDH-Netzelementen: eine Anwendung der Informationsmodellierung", M. Bosse et al., Elektrisches Nachrichtenwesen 4/1993 beschrieben ist. Bei der Ausführung eines solchen Auftrags wird auf die verwalteten Objekte im Speicher zugegriffen und Änderungen der verwalteten Objekte werden in den Dauerspeicher übernommen. Bei der Steuerung von Netzelementen tritt häufig die Forderung auf, daß eine Reihe von Aufträgen konsistent auszuführen sind, d.h. entweder werden alle Aufträge erfolgreich ausgeführt oder keiner. Dazu ist es notwendig, jede eventuell auftretende konsistente Ausführung im Steuerprogramm der Steuerungseinrichtung als Sonderfall zu behandeln und im Quellcode des Steuerprogrammes vorzusehen. Dieses Vorgehen ist für den Programmierer aufwendig und fehleranfällig und führt zu einem langen und langsamen Steuerprogramm.

Aus dem Artikel "ARIES/NT: A Recovery Method Based on Write-Ahead Logging for Nested Transactions" von K. Rothermel et al., Proceedings of the Fifteenth International Conference on Very Large Data Bases, Amsterdam 1989, ist es bekannt, eine Reihe von Zugriffen auf ein verteiltes Datenbanksystem zu einer Transaktion zusammenzufassen um zu erreichen, daß entweder alle Zugriffe erfolgreich ausgeführt werden oder bei Scheitern eines der Zugriffe alle übrigen rückgängig gemacht werden. Eine Transaktion kann dabei mehrere Teiltransaktionen beinhalten.

Das Datenbanksystem besteht aus einer Reihe als *sites* bezeichneter Betriebsstätten, die über ein Kommunikationsnetzwerk miteinander verbunden sind. In jeder Betriebsstätte existiert ein Teilsystem, das als "Buchhalter" bezeichnet wird und das das Initiieren, Migrieren und Beenden von Transaktionen koordiniert. Das beschriebene Transaktionskonzept ist auf die Konsistenz innerhalb der Datenbank beschränkt. Zudem ist es bei dem Transaktionskonzept notwendig, daß der "Buchhalter" alle Zugriffe und damit alle Objekte auf die ein Zugriff erfolgen soll im voraus kennt.

Aufgabe der Erfindung ist es, ein Verfahren zum konsistenten Ausführen von Aufträgen an eine Steuerungseinrichtung eines Netzelementes anzugeben sowie eine Steuerungseinrichtung für ein Netzelement eines Telekommunikationsnetzes, die zur Ausführung des Verfahrens geeignet ist.

Die Aufgabe wird hinsichtlich des Verfahrens gelöst durch die Merkmale des Anspruchs 1 und hinsichtlich der Steuerungseinrichtung durch die Merkmale des Anspruchs 6. Vorteilhafte Ausgestaltungen sind den abhängigen Ansprüchen zu entnehmen.

Erfindungsgemäß werden Objekte beim Zugriff transparent in eine Transaktion eingebunden. Dies hat den Vorteil, daß Fehlerquellen ausgeschlossen werden, die zu einer inkonsistenten Ausführung von Aufträgen führen würden.

Ein weiterer Vorteil der Erfindung besteht darin, daß normale Transaktionen, die aus einer Anzahl einzelner Schritte bestehen, und verschachtelte Transaktionen (engl: *nested transactions),* die neben einzelnen Schritten auch Teiltransaktionen beinhalten, gleich behandelt werden können. Weiter ist vorteilhaft, daß nicht im voraus jedes Objekt bekannt sein muß, auf welches im Rahmen einer Transaktion zugegriffen wird. Dadurch vereinfacht sich die Softwareentwicklung für die Steuerungseinrichtung, da normale und verschachtelte Transaktionen mit demselben Steuerprogramm behandelt werden können.

Im folgenden wird ein Ausführungsbeispiel der Erfindung anhand der Figuren 1 bis 3 erläutert. Es zeigt:
Figur 1: den schematischen Ablauf des erfindungsgemäßen Verfahrens,
Figur 2: ein erfindungsgemäßes Netzelement und
Figur 3: ein Flußdiagramm des erfindungsgemäßen Verfahrens.

Das Netzelement des Ausführungsbeispieles wird von einer Steuerungseinrichtung unter Verwendung sogenannter verwalteter Objekte gesteuert. Verwaltete Objekte sind Abbildungen von physikalischen oder virtuellen Komponenten des Netzelementes, die die statischen und dynamischen Eigenschaften der jeweiligen Komponente beschreiben. Ein verwaltetes Objekt ist eine Instanz einer Klasse verwalteter Objekte. Eine solche Klasse verwalteter Objekte ist definiert durch ihre Attribute, die von ihren Objekten ausführbaren Operationen (engl. operations), die Meldungen (engl. notifications), die ihre Objekte erzeugen können, und ihr Verhalten (engl. behaviour). Jedes verwaltete Objekt besitzt einen eindeutigen Namen. Von Standpunkt des Managementsystems aus existiert ein verwaltetes Objekt dann, wenn es einen eindeutigen Namen hat und wenn es die Operationen und Meldungen unterstützt, die für seine Klasse definiert sind.

Die Gesamtheit der in einem Netzelement existierenden verwalteten Objekte wird als Managed Information *Base*, kurz MIB, bezeichnet und spiegelt die aktuelle Konfiguration des Netzelementes wider. Die verwalteten Objekte sind in einem Speicher (meistens ein RAM) gespeichert und in einer Datenbank, die sich auf einem Dauerspeicher (z.B. einer Festplatte) des Netzelementes befindet, redundant gesichert. Diese Datenbank wird auch mit dem englischen Ausdruck *persistency* oder *persistency database* bezeichnet.

Bei dem Netzelement des Ausführungsbeispiels handelt es sich um einen digitalen Crossconnect. Er empfängt Aufträge von einem übergeordneten Managementsystem, z.B. den Auftrag eine neue Verbindung einzurichten. Bei der Ausführung solcher Aufträge wird auf bestehende verwaltete Objekte zugegriffen oder es werden neue verwaltete Objekte erzeugt. Dabei kann ein Auftrag mehrere Zugriffe auf verwaltete Objekte beinhalten. Oft besteht die Anforderung, mehrere solcher Zugriffe konsistent auszuführen, d.h. entweder müssen alle Zugriffe erfolgreich ausgeführt werden oder es darf keiner der Zugriffe wirksam werden. Deshalb wird nach erfolgreicher Ausführung eine Bestätigung (engl. *commit*) erzeugt. Erst nach erfolgter Bestätigung treten Änderungen an den verwalteten Objekte aufgrund der erfolgten Zugriffe in Kraft. Aktionen, die im Rahmen des Auftrages erforderlich sind, wie z.B. das Senden von Nachrichten, Erzeugen von Alarmen oder Aktualisieren der Hardwarekonfiguration erfolgt erst nach der Bestätigung. Bleibt die Bestätigung aus oder tritt eine Fehlermeldung auf, so werden die Aktionen nicht ausgeführt und bereits erfolgte Änderungen werden rückgängig gemacht.

Ein Grundgedanke der Erfindung besteht nun darin, konsistent auszuführende Zugriffe zu einer Transaktion zusammenzufassen und alle verwalteten Objekte, auf die im Rahmen der Transaktion zugegriffen wird, in die Transaktion einzubinden. Zu diesem Zweck wird ausgenutzt, daß die verwalteten Objekte unter einem ihnen jeweils eigenen, eindeutigen Namen bekannt sind. Auf ein verwaltetes Objekt wird unter Angabe dieses Namens zugegriffen. Erfolgt ein Zugriff auf ein verwaltetes Objekt, so wird der eindeutige Name mit einer physikalischen Speicheradresse verknüpft, an der sich das verwaltete Objekt physikalisch im Speicher befindet. Findet eine solche Verknüpfung statt, so wird automatisch eine Nachricht generiert, mit dem Inhalt, daß ein Zugriff auf das betreffende Objekt erfolgen wird. Aufgrund dieser Nachricht wird das betreffende Objekt in die Transaktion eingebunden. Es findet also erfindungsgemäß eine Kooperation zwischen Objektverwaltung und Transaktionssteuerung statt.

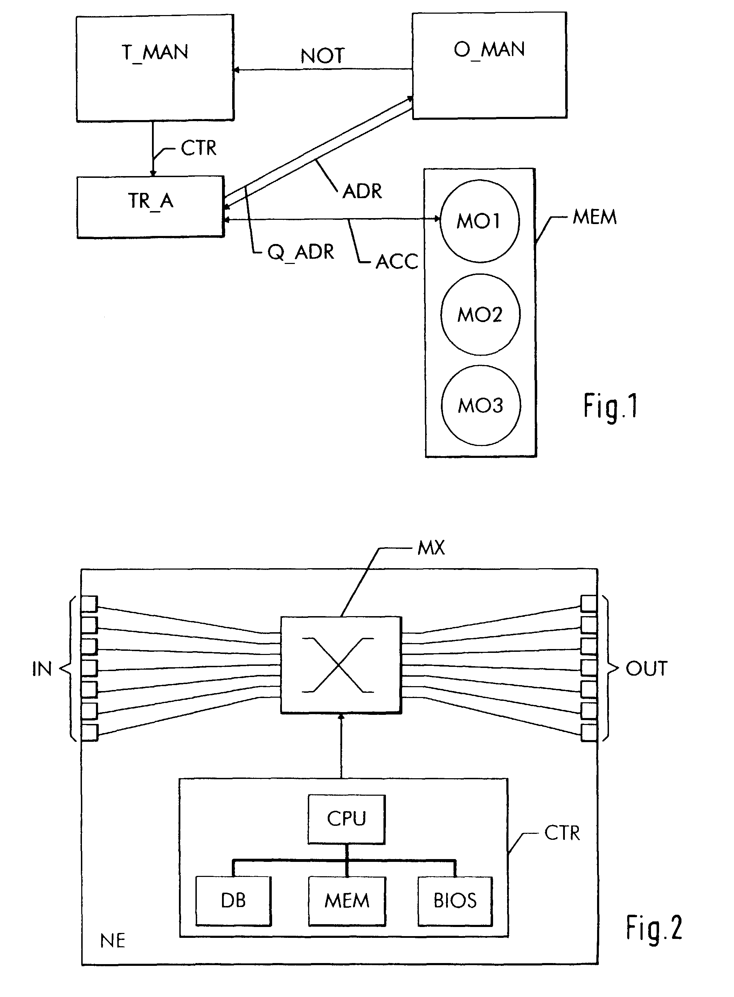

Das Zusammenspiel der unterschiedlichen Steuerungsabläufe bei dem erfindungsgemäßen Verfahren ist in Figur 1 schematisch dargestellt. Eine Transaktionssteuerung T_MAN, z.B. ein als Transaktionsverwalter bezeichneter Steuerungsprozeß, erzeugt und überwacht eine Transaktion TR_A. Die Transaktion TR_A besteht aus einer Reihe einzelner Aufträge, die jeweils Zugriffe auf verwaltete Objekte erfordern. In einem Speicher MEM sind verwaltete Objekte MO1-MO3 gespeichert. Die verwalteten Objekte MO1-MO3 sind einer Objektverwaltung O_MAN, z.B. einem als Objektverwalter bezeichneten Steuerprozeß bekannt. Im Rahmen der Transaktion TR_A soll nun auf das verwaltete Objekt MO1 zugegriffen werden. Der Transaktion TR_A ist jedoch nur der eindeutige Name des Objektes MO1 bekannt. Daher wird zunächst bei der Objektverwaltung O MAN mit einer Anfrage Q_ADR die physikalische Speicheradresse ADR des Objektes MO1 erfragt. Die Objektverwaltung O_MAN stellt nun die Verknüpfung zwischen dem eindeutigen Namen des Objektes MO1 und dessen physikalischer Speicheradresse ADR im Speicher MEM her und teilt der Transaktion TR_A diese mit. Daraufhin führt die Transaktion TR_A den Zugriff ACC auf das verwaltete Objekt MO1 durch. Die Objektverwaltung sendet, ausgelöst durch die Anfrage Q_ADR, der Transaktion TR_A eine Mitteilung NOT mit dem Inhalt, daß ein Zugriff von der Transaktion TR_A auf das verwaltete Objekt MO1 erfolgen soll. Aufgrund dieser Mitteilung schließt die Transaktionssteuerung T_MAN das verwaltete Objekt MO1 in die Transaktion TR_A ein.

Die Transaktionssteuerung T_MAN und die Objektverwaltung O_MAN sind Steuerungsprozesse, die als Softwaremodule ausgeführt sein können. Softwaremodule sind Programmteile oder Unterprogramme aus Steuerbefehlen, die in einer Maschinensprache kodiert sind und die von einem Prozessor ausführbar sind.

Erfindungsgemäß werden also alle verwalteten Objekte, auf die im Rahmen einer Transaktion zugegriffen wird, in die Transaktion eingeschlossen. Dadurch wird erreicht, daß eine Transaktion erst dann beendet werden kann, wenn alle Zugriffe auf verwaltete Objekte erfolgreich abgeschlossen wurden. Der Status der Transaktion wird transparent an die im Zugriff befindlichen Objekte weitergeleitet. Dadurch wird erreicht, daß auch andere Transaktionen als Teiltransaktionen eingeschlossen werden können. Somit werden ohne Ausnahmebehandlung verschachtelte Transaktionen unterstützt, weil alle wesentlichen Statusinformationen beim Zugriff auf ein Objekt mitgeteilt werden. Zu den Statusinformationen zählen z.B., daß das betreffende Objekt nun Teil der Transaktion ist, daß die Transaktion konsistent oder nur in der sogenannten "best effort mode"-Betriebsart ausgeführt werden soll, welcher Art der Zugriff auf das Objekt ist (Lesen/Schreiben oder nur Lesen), daß auf eine Bestätigung gewartet werden soll und welche Art der Rückmeldung von dem verwalteten Objekt erwartet wird.

Unter der "best effort mode"-Betriebsart wird in diesem Zusammenhang verstanden, daß einzelne Schritte nicht konsistent auszuführen sind, daß also einzelne Zugriffe erfolgreich sein können, während andere momentan nicht ausführbar sind und somit scheitern. Es sind damit zwei verschiedene, im voraus festzulegende Betriebsarten für die Ausführung von Aufträgen möglich: die konsistene Ausführung, die als "atomic mode" bezeichnet wird und bei der eine Transaktion eröffnet wird sowie die nicht notwendigerweise konsistente Ausführung, die als "best effort mode" bezeichnet wird. Im "best effort mode" werden alle durchzuführenden Schritte nacheinander jeder für sich durchgeführt und beendet. Dazu können auch mehrere Transaktionen zählen, die unabhängig von einander gestartet und beendet werden. Werden solche mehreren unabhängigen Transaktionen zu Teiltransaktionen einer neuen übergeordneten Transaktion, so werden sie automatisch im ,,atomic mode" ausgeführt. Dies wird durch das transparente Weiterleiten des Transaktionsstatus ermöglicht.

Durch das transparente Weiterleiten des Transaktionsstatus wird auch gewährleistet, daß im Falle verschachtelter Transaktionen Teiltransaktionen (innere Transaktionen) erst dann bestätigt werden, wenn die äußere Transaktion bestätigt wurde. Es ist stets bekannt, ob eine aktuelle Transaktion eine Teiltransaktion einer äußeren Transaktion ist oder nicht. Das Weiterleiten der Statusinformation wird im Ausführungsbeispiel durch die Transaktionssteuerung vorgenommen und durch die Mitteilung der Objektverwaltung veranlaßt.

Im Falle, daß eine laufende Transaktion nicht bestätigt wird, weil beispielsweise ein Zugriffskonflikt oder ein anderer Fehler bei der Ausführung eines Schrittes der Transaktion aufgetreten ist, müssen alle aufgrund der Transaktion bereits erfolgten Änderungen rückgängig gemacht werden. Dies geschieht dadurch, daß geänderte Objekte aus dem Dauerspeicher, in dem sie redundant gesichert sind, wieder neu geladen werden, um den ursprünglichen Zustand wieder herzustellen.

Vorteilhaft ist der Dauerspeicher, in dem die verwalteten Objekte redundant gesichert sind, als Datenbank strukturiert. Änderungen an verwalteten Objekten im Rahmen der Transaktion werden sofort in die Datenbank geschrieben, allerdings an eine freie Stelle, so daß der ursprüngliche Datenbankeintrag des betreffenden Objektes bis zur Bestätigung erhalten bleibt. Danach wird der ursprüngliche Eintrag zum Überschreiben freigegeben. Im Falle, daß die Bestätigung ausbleibt, bleibt der ursprüngliche Eintrag in Kraft und der neue Eintrag wird wieder zum Überschreiben freigegeben. Geänderte Objekte werden dann von der Datenbank aus ihren ursprünglichen Einträgen wieder in den Speicher geladen.

Die erfindungsgemäße Steuerungseinrichtung CTR eines Netzelementes in dem Ausführungsbeispiel ist in Figur 2 dargestellt. Bei dem Netzelement NE handelt es sich um einen digitalen Crossconnect eines digitalen synchronen Nachrichtenübertragungsnetzes, welches nach den Empfehlungen für SDH (synchronous digital hierarchy) oder SONET (synchronous optical network) arbeitet. In einem solchen Nachrichtenübertragungsnetz werden Nachrichten in synchronen Transportmodulen verpackt übertragen. Der Crossconnect hat eine Schaltmatrix MX, mittels der Verbindungen zwischen seinen Eingängen IN und seinen Ausgängen OUT geschaltet werden, und zwar sowohl in der Raum- als auch in der Zeitdomäne. Außerdem rangiert der Crossconnect Untereinheiten der Transportmodule, sogenannte virtuelle Container, zwischen den Transportmodulen. Dadurch können mit Hilfe eines solchen Crossconnects virtuelle Verbindungen in dem Nachrichtenübertragungsnetz eingerichtet werden. An den Eingängen IN und den Ausgängen OUT werden Nachrichtensignale vom Typ STM-4 (synchrones Transportmodul) verarbeitet. Für jeden Endpunkt der Schaltmatrix existiert ein verwaltetes Objekt. Außerdem existieren verwaltete Objekte für alle eingerichteten virtuellen Verbindungen.

Physikalisch ist der Crossconnect aus einer Vielzahl von Leiterplatten (Boards) aufgebaut, wobei jede Leiterplatte von einem eigenen sogenannten On-Board-Controller gesteuert wird. Für jede Leiterplatte existiert ebenfalls ein verwaltetes Objekt, welches die Funktionen und die Konfiguration der zugehörigen Leiterplatte beschreibt.

In dem Netzelement NE ist die Steuerungseinrichtung CTR untergebracht, die die Funktionen des Netzelementes steuert und überwacht, Störungen erkennt, entsprechende Fehlermeldungen generiert und Aufträge von einem übergeordneten Managementsystem des Nachrichtenübertragungsnetzes empfängt und verarbeitet. Die Steuerungseinrichtung weist einen Prozessor CPU zur Steuerung des Netzelementes, einen Speicher MEM, in dem die verwalteten Objekte gespeichert sind, und einen Dauerspeicher DB auf. Der Dauerspeicher ist eine Festplatte. Alternativ können jedoch auch andere Datenträger oder nichtflüchtige Speichertypen verwendet werden. Die Steuerungseinrichtung hat außerdem einen weiteren Speicher BIOS, beispielsweise ein EEPROM oder eine zweite Festplatte, in dem ein Betriebssystem gespeichert ist. Im Ausführungsbeispiel handelt es sich bei dem Betriebssystem um ein UNIX-System. Die Softwaremodule für Transaktionssteuerung und Objektverwaltung bauen auf das Betriebssystem auf. Sie sind Teil einer Anwendung, die als Framework bezeichnet wird und die das Grundgerüst für die Steuersoftware der Steuerungseinrichtung bildet. Prozessor CPU, Speicher MEM, Dauerspeicher DB und Speicher BIOS sind über Datenleitungen miteinander verbunden, z.B. über einen Bus. Physikalisch kann der weitere Speicher auch mit dem Dauerspeicher in einem einzigen Speichermedium (z.B. einer Festplatte) kombiniert sein.

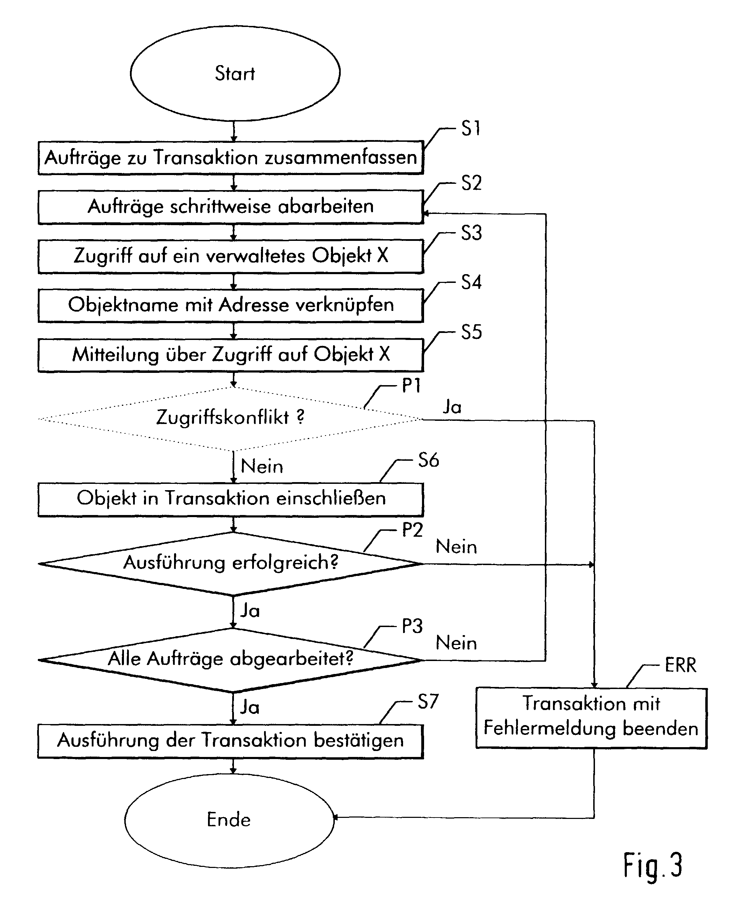

Bei dem in Figur 3 als Flußdiagramm dargestellten Verfahren werden nacheinander die folgenden Schritte ausgeführt:
- Schritt S1:: Eine Transaktion wird eröffnet, indem einer oder mehrere Aufträge zu der Transaktion zusammengefaßt werden.
- Schritt S2:: Die Aufträge werden schrittweise abgearbeitet.
- Schritt S3:: Dabei soll auf ein mit X bezeichnetes verwaltetes Objekt zugegriffen werden.
- Schritt S4:: Der eindeutige Objektname des Objektes X wird nun mit einer physikalischen Adresse verknüpft.
- Schritt S5:: Aufgrund der Verknüpfung wird eine Mitteilung erzeugt, mit dem Inhalt, daß ein Zugriff auf das verwaltete Objekt X statt findet.
- Schritt P1:: Es findet eine Prüfung statt, ob bei dem verwalteten Objekt X ein Zugriffskonflikt auftritt, ob z.B. andere parallel ablaufende Aufträge oder Transaktionen Zugriff auf das verwaltete Objekt X anfordern. Ist dies der Fall, so wird die Transaktion mit einer Fehlermeldung ERR abgebrochen. Bereits ausgeführte Aufträge der Transaktion werden rückgängig gemacht.
Ein Grund dafür, daß ein Zugriffskonflikt auftritt, kann z.B. sein, daß das verwaltete Objekt bereits in eine "älteren" Transaktion eingebunden ist. Da ein Objekt nicht in zwei Transaktionen gleichzeitig eingebunden sein darf, tritt ein Zugriffskonflikt auf. Die Transaktion, die ein Objekt ein zweites Mal einbinden will, wird abgebrochen, die "ältere" Transaktion läuft dessen unbeschadet weiter.
- Schritt S6:: Tritt kein Zugriffskonflikt auf, so wird das verwaltete Objekt X in die Transaktion eingeschlossen. Dadurch kann die Transaktion erst beendet werden, wenn der Zugriff auf das verwaltete Objekt X beendet ist.
- Schritt P2:: Nach Beendigung des Zugriffes wird geprüft, ob der Auftrag erfolgreich ausgeführt wurde. Ist dies nicht der Fall, so wird mit einer Fehlermeldung ERR abgebrochen. Bereits ausgeführte Aufträge der Transaktion werden rückgängig gemacht.
- Schritt P3:: Es findet eine Prüfung statt, ob alle Aufträge der Transaktion abgearbeitet wurden. Ist dies nicht der Fall, so wird mit dem nächsten unbearbeiteten Auftrag bei Schritt S2 fortgefahren.
- Schritt S7:: Wenn alle Aufträge, die Teil der Transaktion sind, erfolgreich beendet wurden, wird die Ausführung der Transaktion bestätigt. Erst nachdem diese Bestätigung erfolgt ist, treten Änderungen aufgrund der Transaktion in Kraft und Aktionen wie das Senden von Mitteilungen werden ausgeführt.

## Patentansprüche

1. Verfahren zum konsistenten Ausführen einer Anzahl von Aufträgen an eine Steuerungseinrichtung (CTR) eines Netzelementes (NE), bei dem zur Ausführung der Aufträge auf verwaltete Objekte (MO1-MO3) zugegriffen wird, bei dem die Aufträge zu einer Transaktion (TR_A) zusammengefaßt werden und bei dem die Ausführung der Aufträge erst nach erfolgter Bestätigung in Kraft tritt und bei ausbleibender Bestätigung rückgängig gemacht wird,
**dadurch gekennzeichnet,**
daß die verwalteten Objekte (MO1-MO3) einen eindeutigen Namen besitzen, der bei Zugriff auf das Objekt mit einer physikalischen Adresse (ADR) verknüpft wird, und daß beim Verknüpfen des Objektnamens eine Nachricht (NOT) erzeugt wird, aufgrund der ein verwaltetes Objekt (MO1), auf das im Rahmen der Transaktion (TR_A) zugegriffen wird, in die Transaktion eingeschlossen wird.

2. Verfahren nach Anspruch 1, bei dem die Ausführung der Transaktion (TR_A) von einer Transaktionssteuerung (T_MAN) überwacht wird und die Transaktionssteuerung alle verwalteten Objekte (MO1) in die Transaktion (TR_A) einschließt, auf die während der Ausführung zugegriffen wird und bei dem eine Objektverwaltung (O_MAN), die die eindeutigen Namen der verwalteten Objekte den physikalischen Speicheradressen (ADR) zuordnet, eine Mitteilung (NOT) an die Transaktionssteuerung (T_MAN) sendet, wenn auf ein Objekt (MO1) zugegriffen wird.

3. Verfahren nach Anspruch 1, bei dem geprüft wird, ob ein Zugriffskonflikt auftritt, bevor ein verwaltetes Objekt in die Transaktion (TR_A) eingeschlossen wird und bei dem ein verwaltetes Objekt, bei dem ein Zugriffskonflikt auftritt nicht in die Transaktion eingeschlossen wird und die Transaktion in diesem Falle mit einer Fehlermeldung (ERR) beendet wird.

4. Verfahren nach Anspruch 1, bei dem dem im Zugriff (ACC) befindlichen verwalteten Objekt (MO1) der Transaktionsstatus mitgeteilt wird.

5. Verfahren nach Anspruch 1, bei dem die verwalteten Objekte (MO1-M03) in einer Datenbank (DB) der Steuerungseinrichtung (CTR) gesichert sind und Änderungen verwalteter Objekte nach erfolgter Bestätigung in die Datenbank übernommen werden.

6. Steuerungseinrichtung (CTR) für ein Netzelement (NE) eines Telekommunikationsnetzes mit einem Prozessor (CPU), einem Speicher (MEM), in dem verwaltete Objekte (MO1-MO3) gespeichert sind und einem Dauerspeicher (DB), in dem die verwalteten Objekte redundant gesichert sind,
**gekennzeichnet durch,**
- eine Transaktionssteuerung (T_MAN), die zur konsistenten Ausführung einer Reihe von Aufträgen die Aufträge zu einer Transaktion (TR_A) zusammenfaßt und die ein aktuelles verwaltetes Objekte (MO1), auf das im Rahmen der Transaktion zugegriffen wird, aufgrund einer Mitteilung in die Transaktion (TR_A) einschließt, und
- eine Objektverwaltung, die einen eindeutigen Namen des aktuellen verwalteten Objektes (MO1) bei Zugriff (ACC) auf das Objekt mit einer physikalischen Adresse (ADR) verknüpft und beim Verknüpfen des Objektnamens die Nachricht (NOT) erzeugt und an die Transaktionssteuerung (T_MAN) sendet.

7. Steuerungseinrichtung nach Anspruch 6 bei dem der Dauerspeicher zu einer Datenbank strukturiert ist.
